# DEMANDE DE BREVET EUROPEEN

(11) **EP 2 093 743 A1**
(43) Date de publication de la demande: **26.08.2009**
(21) Numéro de dépôt: 09305101.9
(22) Date de dépôt: 03.02.2009
(51) Int. Cl.: G09B 21/00

(54) **Système permettant d'informer à distance et de manière sélective**

(30) Priorité: 21.02.2008 FR 0800940
(71) Demandeur: Esium, 59120 Loos (FR)
(72) Inventeur: Verschaeve, Pierre, 59420, Mouvaux (FR)
(74) Mandataire: Matkowska, Franck

(57) **Abrégé**

Le système permet d'informer à distance et de manière sélective un utilisateur dans un environnement. Il comporte plusieurs balises signalétiques (Bᵢ) et au moins une télécommande (T) qui est destinée à être manipulée par l'utilisateur. La télécommande (T) comporte un émetteur radio (6), des moyens de sélection (8) permettant à l'utilisateur de sélectionner une information (I) parmi un ensemble d'informations (Iⱼ), des moyens de restitution vocale (9) permettant de restituer vocalement, de manière audible et compréhensible pour l'utilisateur, systématiquement chaque information (I) sélectionnée à l'aide des moyens de sélection (8), des moyens de validation (10) permettant à l'utilisateur de déclencher l'émission par l'émetteur (6) d'un code (CB) spécifique de la dernière information (I) qui a été restituée vocalement. Chaque balise (Bᵢ) comporte un récepteur radio (6), des moyens de reconnaissance des codes (CB) reçus, des moyens de signalisation (4) qui sont déclenchés lorsqu'un code reçu (CB) a été reconnu.

## Description

### Domaine technique

La présente invention concerne un nouveau système mettant en oeuvre une pluralité de balises signalétiques reparties dans un environnement et permettant dans cet environnement d'informer à distance et de manière sélective un utilisateur muni d'une télécommande. L'environnement peut indifféremment être un environnement couvert ou à l'air libre. L'invention trouve plus particulièrement son application pour informer et/ou guider et/ou aider une personne à se repérer dans un environnement, en particulier, mais non exclusivement, une personne malvoyante.

### Art antérieur

II existe à ce jour différentes solutions techniques permettant par exemple à une personne de se repérer dans un environnement, et mettant en oeuvre des balises informationnelles qui sont réparties dans un environnement, et qui sont aptes à communiquer avec une télécommande manipulable par ladite personne. La plupart du temps ces solutions sont dédiées au guidage ou au repérage d'une personne malvoyante ou non voyante dans un environnement. Mais elles peuvent également être adaptées et utilisées par des personnes voyantes afin de les aider par exemple à se repérer rapidement dans un environnement ou afin d'obtenir des informations sur cet environnement. Différentes solutions technique de ce type sont décrites notamment dans les demandes de brevet suivantes : WO 03/044757, WO 03/075245, US 4 660 022, US 6 097 305, US 5 508 699, US 5 144 294.

### Objectif de l'invention

L'invention a pour objectif de proposer une nouvelle solution technique qui met en oeuvre plusieurs balises informationnelles et qui permet dans un environnement d'informer à distance et de manière sélective un utilisateur muni d'une télécommande.

### Résumé de l'invention

L'invention a ainsi pour premier objet un système qui permet d'informer à distance et de manière sélective un utilisateur dans un environnement et qui comporte plusieurs balises informationnelles (Bᵢ) et au moins une télécommande destinée à être manipulée par l'utilisateur. Dans le cadre de l'invention, la notion d'environnement doit être comprise dans son acceptation la plus large, indépendamment de la taille ou du type d'environnement, et peut notamment aussi bien désigner un environnement couvert, tel qu'un bâtiment, ou un environnement extérieur à l'air libre, ou une combinaison des deux.

Une télécommande du système de l'invention comporte :
- un émetteur radio,
- des moyens de sélection permettant à l'utilisateur de sélectionner une information (I) parmi un ensemble d'informations (Iⱼ),
- des moyens de restitution vocale permettant de restituer vocalement, de manière audible et compréhensible pour l'utilisateur, systématiquement chaque information (I) sélectionnée à l'aide des moyens de sélection (8),
- des moyens de validation permettant à l'utilisateur de déclencher l'émission par l'émetteur d'un code (CB) spécifique de la dernière information (I) qui a été restituée vocalement.

Chaque balise (Bᵢ) du système de l'invention comporte :
- un récepteur radio,
- des moyens de reconnaissance des codes reçus,
- des moyens de signalisation qui sont déclenchés lorsqu'un code reçu a été reconnu.

Chaque fois que l'utilisateur sélectionne une information au moyen de sa télécommande, celle-ci lui est restituée vocalement, et si cette information lui convient, l'utilisateur la valide, ce qui déclenche automatiquement l'envoi, par la télécommande, du code spécifique de cette information. Toutes les balises de l'environnement à portée d'émission de la télécommande reçoivent ce code. La ou les balises signalétiques qui reconnaissent ce code sont déclenchées.

La solution de l'invention facilite avantageusement la manipulation de la télécommande par l'utilisateur et le choix par l'utilisateur d'au moins une balise signalétique parmi un nombre de balises pouvant être important.

Dans une variante préférée de réalisation, les moyens de sélection de la télécommande sont conçus pour permettre à l'utilisateur de parcourir de manière séquentielle et en boucle les informations (Iⱼ). Par exemple, les moyens de sélection comportent un sélecteur de type molette ou touche, qui permet lorsqu'il est manipulé de parcourir séquentiellement et en boucle une liste d'informations (Iⱼ). Cette variante permet avantageusement d'éviter la multiplication des touches de sélection, tout en facilitant le choix par l'utilisateur d'au moins une balise signalétique parmi un nombre de balises pouvant être important

De manière facultative selon l'invention, le système de l'invention peut comporter les caractéristiques techniques optionnelles suivante prises seules ou en combinaison les unes avec les autres :
- une télécommande (T) comporte au moins une mémoire dans laquelle sont stockés plusieurs codes (CBⱼ) différents et plusieurs informations (Iⱼ) différentes, chaque code (CBⱼ) étant associé à une information (Iⱼ) qui lui est spécifique ;
- la télécommande comporte un récepteur radio ;
- au moins une balise (Bᵢ) comporte un émetteur radio ;
- une télécommande (T) est paramétrable par radio avec des codes (CBⱼ) et des informations (Iⱼ);
- une télécommande (T) est paramétrable par radio, par tout ou partie des balises (Bᵢ), avec des codes (CBⱼ) et des informations (Iⱼ) ;
- la ou les télécommandes (T) sont conçues pour communiquer avec les balises (Bᵢ) via un réseau radio ;
- les moyens de signalisation d'une balise comportent des moyens de diffusion sonore ; ces moyens de diffusion sonore comportent plus particulièrement, mais pas nécessairement, des moyens de restitution vocale permettant de restituer vocalement et de manière amplifiée un message vocal ;
- les moyens de signalisation comportent des moyens de diffusion d'une information visuelle.

L'invention a pour autre objet une télécommande, en tant que telle, pour système d'information sélectif et à distance d'un utilisateur, ladite télécommande comportant :
- un émetteur radio,
- des moyens de sélection permettant à l'utilisateur de sélectionner une information (I) parmi un ensemble d'informations (Ij),
- des moyens de restitution vocale permettant de restituer vocalement, de manière audible et compréhensible pour l'utilisateur, systématiquement chaque information (I) sélectionnée à l'aide des moyens de sélection,
- des moyens de validation permettant à l'utilisateur de déclencher l'émission par l'émetteur d'un code (CB) spécifique de la dernière information (I) qui a été restituée vocalement.

L'invention a également pour autre objet un procédé de mise en oeuvre du système précité. Selon ce procédé, un utilisateur muni d'une télécommande (T), effectue les opérations suivantes :
- sélection au moyen de la télécommande (T) d'une information (I) parmi un ensemble d'informations (Iⱼ), ladite information sélectionnée (I) étant systématiquement resituée vocalement à l'utilisateur par la télécommande,
- validation au moyen de la télécommande (T) d'une information (I) qui, après restitution vocale, convient à l'utilisateur, ce qui déclenche l'émission par la télécommande (T) du code (CB) spécifique de l'information (I) sélectionnée et validée,
- repérage visuel et/ou auditif par l'utilisateur d'au moins une balise de l'environnement qui, après réception et reconnaissance du code (CB) émis par la télécommande, diffuse une information sonore et/ou visuelle.

L'invention a enfin pour objet l'utilisation du système précité pour informer et/ou guider et/ou aider une personne à se repérer dans un environnement, ladite personne étant équipée d'une télécommande (T) et les balises (Bᵢ) étant réparties dans l'environnement.

### Brève description des figures

Des exemples particuliers de réalisation de l'invention vont à présent être décrits en détails, à titres d'exemples non limitatifs et non exhaustifs de l'invention, et en référence aux dessins annexés sur lesquels :
- la figure 1 représente de manière schématique une architecture électronique d'une balise signalétique d'une télécommande d'un système de l'invention,
- la figure 2 est un organigramme de fonctionnement d'une télécommande,
- la figure 3 est un organigramme de fonctionnement d'une balise signalétique.

### Description détaillée

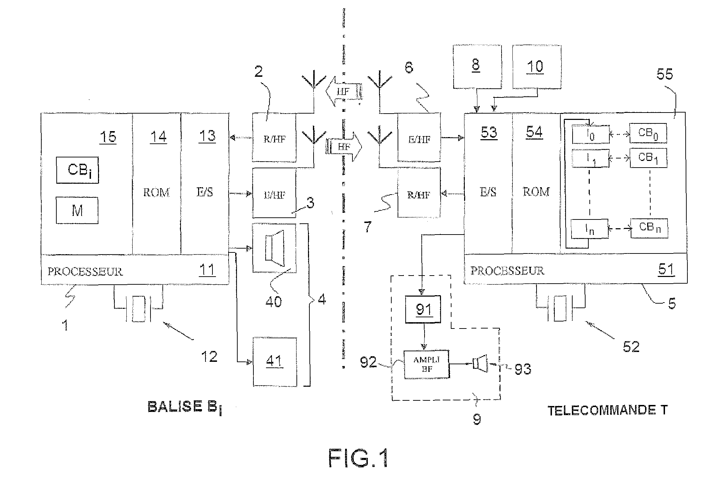

On a représenté sur la figure 1, un exemple d'architecture électronique d'une balise signalétique Bᵢ et un exemple d'architecture électronique d'une télécommande T, qui sont mises en oeuvre dans une variante de réalisation d'un système de l'invention.

Chaque balise signalétique Bᵢ est disposée dans un environnement donné pour repérer un point important et permet de fournir une information sonore et/ou visuelle lorsqu'elle est déclenchée à distance et de manière sélective par un utilisateur muni d'une télécommande T.

A titre d'exemples non limitatifs et non exhaustifs de l'invention, une balise signalétique Bᵢ de l'invention peut être utilisée pour repérer un accès particulier dans un bâtiment, tel que par exemple un ascenseur, un couloir, une sortie de secours etc..., ou encore pour repérer un lieu dans un environnement ouvert, tel que par exemple une gare, une station de métro, un bâtiment public, etc... Une balise signalétique Bᵢ est le plus souvent utilisée pour repérer un point fixe dans un environnement mais peut également être utilisée pour repérer un point mobile. La balise signalétique Bᵢ peut indifférent être intégrée à un objet existant de l'environnement, ledit objet ayant été modifié pour remplir une fonction supplémentaire de balise signalétique conformément à l'invention, ou elle peut être un module distinct rapporté dans l'environnement.

### Architecture d'une balise signalétique Bᵢ

Dans la variante particulière de réalisation la figure 1, l'architecture électronique de la balise Bᵢ comporte une unité de traitement programmable réalisée au moyen d'un microcontrôleur 1. D'autres formes de réalisation sont toutefois envisageables, l'unité de traitement programmable pouvant par exemple être réalisée au moyen d'un microprocesseur, ou d'un circuit électronique spécifique de type ASIC, ou d'un composant électronique programmable de type FPGA, EPLD.

Le microcontrôleur 1 comporte essentiellement :
- un processeur 11 cadencé par un quartz 12,
- des ports d'Entrées/Sorties 13, permettant de faire communiquer le processeur avec des périphériques extérieurs,
- une première mémoire 14, de type ROM, dans laquelle est sauvegardé un programme résident, qui permet de faire fonctionner le processeur 11, et qui est spécifique de l'invention,
- une deuxième mémoire 15, de type ROM ou RAM, dans laquelle est principalement sauvegardé au moins un code CBᵢ.

La balise Bᵢ comporte également :
- un récepteur radio (HF) 2, relié à un port d'entrée adapté du microcontrôleur 1
- un émetteur radio (HF) 3, relié à un port de sortie adapté du microcontrôleur 1,
- des moyens de signalisation 4, qui sont reliés à des ports de sortie adaptés du microcontrôleur 1.

L'alimentation électrique (non représentée) de l'ensemble des composants électroniques actifs précités de la balise peut selon le cas être réalisée à partir d'une source d'alimentation électrique existante au point de l'environnement repéré par la balise, ou être réalisée de manière indépendante au moyen d'une source électrique autonome de type batterie ou piles.

Le récepteur radio (HF) 2 permet de manière connue la réception omnidirectionnelle d'une onde porteuse (HF) modulée (par exemple onde émise par une télécommande T) et la démodulation de cette onde porteuse. Les données issues de cette démodulation sont communiquées au processeur 11 via le port d'entrée auquel est relié le récepteur (HF) 2.

L'émetteur radio (HF) 3 permet de manière connue l'émission omnidirectionnelle d'une onde porteuse (HF) modulée afin de transmettre, par exemple vers les télécommandes T présentes dans l'environnement et à portée d'émission, des données délivrées par le processeur 11 via le port de sortie auquel est relié l'émetteur radio 3.

La mise en oeuvre d'un émetteur radio 3 est toutefois optionnelle et non limitative de l'invention. Dans une variante plus simple de réalisation, une balise Bᵢ peut comporter uniquement un récepteur radio 2.

### Architecture d'une télécommande T

La télécommande T qui est fournie à chaque utilisateur, et qui est manipulée par l'utilisateur pour déclencher, à distance et de manière sélective, au moins une balise Bᵢ parmi un ensemble de balises situées dans l'environnement de l'utilisateur, peut être un dispositif portable spécifique, ou peut être intégrée à un objet (par exemple une canne ) ou un vêtement ou article vestimentaire porté par l'utilisateur. Dans la suite de la description, seule l'architecture électronique et le fonctionnement de cette télécommande T seront détaillés.

Dans la variante particulière de réalisation la figure 1, l'architecture électronique de la télécommande T comporte une unité de traitement programmable réalisée au moyen d'un microcontrôleur 5. D'autres formes de réalisation sont toutefois envisageables, l'unité de traitement programmable pouvant par exemple être réalisée au moyen d'un microprocesseur, ou d'un circuit électronique spécifique de type ASIC, ou d'un composant électronique programmable de type FPGA, EPLD.

Le microcontrôleur 5 comporte essentiellement :
- un processeur 51 cadencé par un quartz 52,
- des ports d'Entrées/Sorties 53, permettant de faire communiquer le processeur avec des périphériques extérieurs,
- une première mémoire 54, de type ROM, dans laquelle est sauvegardé un programme résident, qui permet de faire fonctionner le processeur 51, et qui est spécifique de l'invention,
- une deuxième mémoire 55, de type ROM ou RAM.

Dans la mémoire 55 sont stockés plusieurs codes (CBⱼ) différents et plusieurs informations (Iⱼ) différentes, chaque code (CBⱼ) étant spécifique d'une information (Iⱼ) . Plus particulièrement, chaque code (CBⱼ) est associé en mémoire 55 (par exemple au moyen d'une table) à une information (Iⱼ) qui lui est spécifique. Cette mémoire 55 peut avantageusement, mais pas nécessairement, être amovible afin de faciliter le paramétrage de la télécommande.

La télécommande T comporte également :
- un émetteur radio (HF) 6, compatible avec les récepteurs (HF) 2 des balises, et relié à un port de sortie adapté du microcontrôleur 5,
- un récepteur radio (HF) 7, compatible avec les émetteurs (HF) 3 des balises, et relié à un port d'entrée adapté du microcontrôleur 5,
- des moyens de sélection 8, qui sont reliés à un port d'entrée adapté du microcontrôleur 5, et qui permettent à l'utilisateur de sélectionner une information (I) parmi l'ensemble d'informations Iⱼ sauvegardées dans la mémoire 55,
- des moyens de restitution vocale 9, qui sont reliés à un port de sortie adaptée du microcontrôleur 5, et qui permettent de restituer vocalement de manière audible et compréhensible pour la personne chaque information (I) sélectionnée à l'aide des moyens de sélection 8,
- des moyens de validation 10, qui sont reliés à un port d'entrée adapté du microcontrôleur 5, et qui permettent à l'utilisateur de déclencher l'émission par l'émetteur du code (CB) associé à la dernière information (I) qui a été restituée vocalement,
- une alimentation électrique autonome (non représentée), de type pile ou batterie, fournissant l'énergie électrique nécessaire à chaque composant électronique actif de la télécommande.

La mise en oeuvre d'un récepteur radio 7 est optionnelle et non limitative de l'invention. Dans une variante plus simple de réalisation, une télécommande T ᵢ peut comporter uniquement un émetteur radio 6.

Les moyens de restitution vocale 9 comportent essentiellement :
- un synthétiseur vocal 91,
- un amplificateur basse fréquence 92
- un haut-parleur miniature 93, qui est piloté par l'amplificateur basse fréquence 92.

Ces moyens de restitution vocale 9 permettent de restituer vocalement, de manière audible et compréhensible par l'utilisateur manipulant la télécommande T, des informations (Iⱼ) envoyées au synthétiseur vocal 91 par le processeur 51, par exemple sous forme de données binaires.

Le haut-parleur miniature 93 peut être constitué par un écouteur que l'utilisateur loge dans l'oreille ou être un mini haut parleur diffusant des informations vocales avec une amplification suffisante pour être audible avec une faible portée (typiquement moins d'un mètre). L'amplification réalisée par l'amplificateur basse fréquence 92 peut avantageusement être réglable par l'utilisateur afin d'adapter la télécommande à l'audition de l'utilisateur.

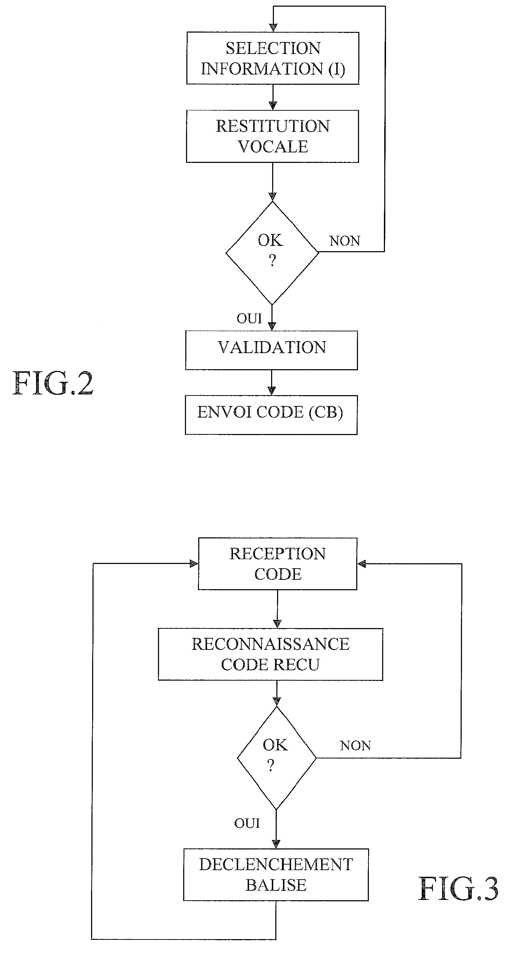

Un exemple de fonctionnement du système de l'invention va à présent être détaillé en référence aux organigrammes des figures 2 et 3.

### Fonctionnement de la télécommande T

### Sélection

En référence à la figure 2, un utilisateur muni d'une télécommande T sélectionne, en utilisant les moyens de sélection 8 de la télécommande, une information (I) parmi les informations (Ij) stockées en mémoire 54.

Les moyens 8 de sélection peuvent être implémentés sous différentes formes.

De préférence, mais non nécessairement, les moyens 8 de sélection sont conçus pour faire défiler séquentiellement et en boucle les informations (Ij) mémorisées dans la mémoire 55. Par exemple, ces moyens de sélection 8 sont de type manuel et comportent une molette ou au moins une touche actionnable par l'utilisateur. La rotation de la molette par l'utilisateur, ou une pression continue sur la touche, ou une succession de pressions sur la touche, permet de déclencher vers le processeur 51 au moins une interruption. Dans cette variante, les informations (Ij) sont par exemple stockées en mémoire sous la forme d'une liste circulaire L (I₀, I₁, ... Iₖ, Iₖ₊₁,... Iₙ). Lorsque le processeur 51 reçoit ce signal d'interruption, il exécute automatiquement une tâche dite de « sélection » sauvegardée en mémoire 54, au cours de laquelle le processeur 51 pointe dans la liste L d'informations (Iⱼ) en mémoire 55 sur l'information suivante (Par exemple Iₖ₊₁ si il pointait déjà sur l'information Iₖ à l'issue de l'opération de sélection précédente). La liste L étant circulaire, dans le cas particulier où à l'issue de l'opération de sélection précédente, le processeur 51 pointait sur la dernière information de la liste L (par exemple Iₙ ou Iₒ) , il reboucle automatiquement sur la première information de la liste L (par exemple I₀ ou Iₙ). Dans le cas de la mise en oeuvre d'une molette de sélection, en fonction du sens de rotation de la molette le processeur 51 peut parcourir la liste L dans un sens ou dans l'autre, c'est-à-dire en pointant de manière incrémentielle sur les informations de la liste (Iₒ, I₁, ... Iₖ, Iₖ₊₁,... Iₙ) ou au contraire de manière décrémentielle (Iₙ... Iₖ, Iₖ₋₁,..., I₁, Iₒ). La molette peut également être remplacée par deux touches distinctes, une touche permettant de parcourir la liste L dans un sens, et l'autre touche permettant de parcourir la liste L dans l'autre sens.

Dans une autre variante, les moyens de sélection 8 ne sont pas de type manuel, mais mettent en oeuvre des moyens de reconnaissance vocale, permettant à l'utilisateur de commander à la voix la consultation des informations dans la liste L. Par exemple, lesdits moyens de reconnaissance vocale sont conçus pour reconnaître les mots « suivant » et « précédent », et le processeur 51 parcourt la liste L dans un sens ou dans l'autre selon le mot prononcé et reconnu.

Dans une autre variante de réalisation, la télécommande T peut comporte plusieurs touches de sélection (tj) ou équivalent, chaque touche étant associée à une information (Ij) stockées en mémoire 55, la sélection d'une information (I) parmi les informations (Ij) étant effectuée par exemple par appui sur la touche correspondant à cette information. Dans ce cas, lorsque l'utilisateur actionne une touche (tj), le processeur 51 reçoit un signal d'interruption et il exécute automatiquement une tâche de sélection sauvegardée en mémoire 54, au cours de laquelle le processeur 51 pointe en mémoire 55 directement sur l'information (Ij) correspondant à la touche (tj) actionnée.

### Restitution vocale

Après chaque opération de sélection d'une information (I) parmi l'ensemble des information (Iⱼ) stockées en mémoire 55, le processeur 51 commande automatiquement les moyens de restitution vocale 9, de telle sorte que l'information (I) sélectionnée, est systématiquement restituée vocalement de manière audible par l'utilisateur.

Une information restituée vocalement est par exemple un message vocal identifiant un point de l'environnement dans lequel se déplace l'utilisateur de la télécommande, tel que par exemple « ascenseur », « guichet », « accueil », « gare », « mairie »,...

L'information restituée vocalement peut en outre être plus ou moins complexe, et peut ne pas se limiter à un seul mot, mais comporter une succession de mots, tel que par exemple, « sortie de secours », « quai de gare - direction Paris ».

Si l'information vocale qui a été restituée et qui est entendue par l'utilisateur ne lui convient pas, celui-ci sélectionne une autre l'information (I) parmi les informations (Iⱼ) stockées en mémoire 55, ce qui de nouveau déclenche automatiquement la restitution vocale de cette information par les moyens de restitution vocale 9 de la télécommande.

L'utilisateur réitère au besoin ces opérations de sélection suivies systématiquement d'une restitution vocale jusqu'à ce que l'information sélectionnée (I) qui lui est vocalement restituée lui convienne.

### Validation

Lorsque l'information (I) sélectionnée et restituée vocalement convient à l'utilisateur, ce denier valide l'information (I) sélectionnée en utilisant les moyens de validation 10.

Les moyens de validation 10 peuvent être de type manuelle, et comporter un élément actionnable manuellement par l'utilisateur, de type touche ou équivalent. Dans ce cas, lorsque l'utilisateur actionne manuellement les moyens de validation 10, un signal d'interruption est envoyé au processeur 51, lequel exécute automatiquement une tâche dite « envoi » sauvegardée en mémoire 54 et détaillée ci-après.

Dans une variante plus sophistiquée, les moyens de validation 10 peuvent être de type vocal ; dans ce cas, l'interface comporte des moyens de reconnaissance vocale, qui permettent à l'utilisateur de valider à la voix avec un mot de reconnaissance prédéfini (par exemple « ENVOI ») la sélection de l'information (I) effectuée préalablement avec les moyens de sélection 8. Lorsque le mot de validation prononcé par l'utilisateur est reconnu par les moyens de reconnaissance vocale, un signal d'interruption est envoyé au processeur 51, lequel exécute automatiquement la tâche dite « envoi ».

### Emission

La tâche « envoi » exécutée par le processeur 51, consiste pour le processeur 51 à récupérer en mémoire 55 le code (CB) associé à cette information (I) sélectionnée et validée, et à faire émettre ce code (CB) par l'émetteur radio 6.

### Fonctionnement des balises CBᵢ

Chaque balise Bᵢ située à portée d'émission d'une télécommande T reçoit le code CB émis par une télécommande T.

A chaque réception d'un code CB, le processeur 11 de la balise compare le code CB reçu avec le code CBᵢ stockés en mémoire 15 de la balise Bᵢ.

Si le code CB n'est pas reconnu, le processeur 51 attend la réception d'un nouveau code CB.

Si le code reçu CB, après comparaison avec le code CBᵢ stocké en mémoire 15, est reconnu, le processeur 51 commande les moyens de signalisation 4, de telle sorte que ces moyens de signalisation 4 diffusent dans l'environnement une information (sonore et/ou visuelle).

Dans l'exemple particulier et non limitatif de la figure 1, les moyens de signalisation 4 comportent un moyen de diffusion sonore 40 et un moyen 41 de diffusion d'une information visuelle.

Le moyen de diffusion sonore 40 permet de diffuser dans l'environnement une information sonore suffisamment amplifiée pour être audible par un utilisateur proche de la balise et par exemple situé à quelques mètres de la balise.

L'information sonore diffusée peut par exemple être un simple son audible par un utilisateur et lui permettant de localiser à l'ouie le point de l'environnent où est située la balise.

L'information sonore diffusée peut être plus sophistiquée et consister en un message vocal M (mot ou phrase) qui est par exemple sauvegardé dans la mémoire 15 de la balise, et qui est diffusé de manière audible et compréhensible par l' utilisateur. Par exemple, cette information sonore pourra être identique à l'information qui avait été restituée vocalement à l'utilisateur par sa télécommande (par exemple « ascenseur », « guichet », « accueil », « gare », « mairie »,...), éventuellement enrichie d'informations supplémentaires (par exemple « la mairie est fermée et ouvre à 14h00 », « ascenseur en panne », « ascenseur montant », ...). Dans ce cas, l'information sonore diffusée permet à l'utilisateur non seulement de localiser le point de l'environnent où est située la balise, mais également de recevoir une information (par exemple information d'identification) sur le point de l'environnement repéré par la balise.

Le moyen 41 de diffusion d'une information visuelle permet de diffuser dans l'environnement une information visuelle visible par un utilisateur proche de la balise et par exemple situé à quelques mètres de la balise.

Le moyen 41 de diffusion d'une information visuelle peut par exemple être un simple témoin lumineux ou gyrophare, qui est allumé de manière intermittente ou continue lorsque le moyen 41 de diffusion est déclenché par le processeur 15 de la balise, après reconnaissance du code reçu, et qui permet à l'utilisateur de la télécommande de localiser le point de l'environnent où est située la balise.

Dans une variante plus sophistiquée, le moyen 41 de diffusion d'une information visuelle peut être conçu pour afficher un message M (mot ou phrase) qui est visible par l' utilisateur (par exemple « ascenseur », « guichet », « accueil », « gare », « mairie »,...) et qui lui permettent non seulement de localiser le point de l'environnent où est situé la balise, mais également de recevoir une information (par exemple information d'identification) sur le point de l'environnement repéré par la balise.

Dans une variante de réalisation plus simple, les moyens de signalisation 4 d'une balise Bᵢ peuvent comporter uniquement un moyen de diffusion sonore 40 ou uniquement un moyen 41 de diffusion d'une information visuelle.

Dans une variante de réalisation de l'invention, une balise (Bᵢ) peut comporter en mémoire 15 plusieurs codes CB_{i,j} qui sont chacun spécifique d'au moins une information devant être diffusée par la balise lorsqu'elle reçoit le code correspondant. Dans cette variante, après chaque réception d'un code CB, le processeur 11 de la balise compare le code CB reçu avec les codes CB_{i,j} stockés en mémoire 15 de la balise Bᵢ. Si le code CB reçu est reconnu, le processeur 51 commande les moyens de signalisation 4, de telle sorte que ces moyens de signalisation 4 diffusent dans l'environnement une information (sonore et/ou visuelle) qui est spécifique de ce code reçu et reconnu. Par exemple la mémoire 15 peut contenir une table contenant plusieurs codes CB_{i,j} , et associant chaque code à un message vocal M_{i,j} spécifique du code CB_{i,j} et/ou à une action A_{i,j} de signalisation sonore et/ou visuelle (par exemple émission d'un signal sonore ou d'un signal lumineux). Lorsque la balise reconnaît le code CB reçu, elle diffuse le cas échéant le message vocal M_{i,j} correspondant à ce code reçu et/ou le cas échéant déclenche l'action A_{i,j} de signalisation sonore et/ou visuelle associée à ce code.

On notera également que plusieurs balises différentes d'un environnement peuvent être paramétrées avec un même code CB_{i,j} ou CBᵢ. Dans ce cas, lorsque l'utilisateur émet le code correspondant (CB) au moyen de la télécommande, toutes les balises de l'environnement, qui se trouvent à portée d'émission de la télécommande et qui reconnaissent ce code, seront déclenchées. Par exemple, une information Iⱼ de la télécommande restituée vocalement peut être « localisation », ladite information étant associée à un code universel reconnu par toute les balises. Lorsque ce code est émis par la télécommande, toutes les balises à portée d'émission reconnaissent ce code et déclenchent une action de signalisation sonore et/ou visuelle (par exemple émission d'un signal sonore ou d'un signal lumineux), ce qui permet à l'utilisateur de repérer toutes les balises de son environnement, dont il est suffisamment proche pour entendre les signaux sonores diffusés ou pour voir les signaux visuels diffusés.

Le système de l'invention peut avantageusement servir à informer et/ou guider et/ou aider à se repérer dans un environnement une personne équipée d'une télécommande, les balises étant positionnées à différents points importants de cet environnement. Il présente principalement, mais non exclusivement, un intérêt pour informer et/ou guider et/ou aider à se repérer une personne malvoyante ou non-voyante. Le système peut également être adapté et utilisé pour des personnes voyantes, et en particulier pour des personnes voyantes ne pratiquant pas la langue de l'environnement dans lequel ils se trouvent. Dans ce cas, la télécommande T sera paramétrée en sorte de restituer vocalement dans la langue de l'utilisateur de la télécommande chaque information (I) sélectionnée.

L'invention n'est pas limitée aux variantes de réalisation qui ont été décrites en référence aux figures annexées. De manière non exhaustive, les modifications suivantes peuvent également être apportées aux télécommandes ou aux balises.

### Télécommande paramétrable à distance par les balises

Les informations (Iⱼ) stockées en mémoire 55 d'une télécommande peuvent être chargées d'origine dans la télécommande. Néanmoins, dans une autre variante de réalisation plus sophistiquée, ces informations (Ij) peuvent être téléchargées dans la mémoire 55 de la télécommande T, via un réseau radio, par la ou les balises Bᵢ présentes dans l'environnement de l'utilisateur. Dans ce cas, une balise Bᵢ doit comporter un émetteur radio 3 et une télécommande T doit comporter un récepteur radio 7.

Les deux solutions (paramétrage d'origine de la télécommande et paramétrage de la télécommande à distance par les balises) peuvent être combinées.

### Balises paramétrables à distance

Dans une variante de réalisation, les codes (CBᵢ) et/ou les messages (M) vocaux ou visuels diffusés par une balise peuvent avoir été téléchargés à distance dans la balise par exemple par radio.

### Réseau radio

Les balises Bᵢ peuvent être conçues pour faire connaître leur présence au sein d'un réseau radio, en s'identifiant au sein du réseau. Dans ce cas, une télécommande T n'est pas nécessairement paramétrée en local avec des informations (Iⱼ) et avec des codes (CBⱼ) associés, mais peut être conçue pour:
- d'une part sélectionner, lors d'une opération de sélection par l'utilisateur, une information (I) parmi une liste d'informations (Iⱼ) qui sont disponibles sur le réseau radio et qui correspondent aux balises qui se sont identifiées sur le réseau,
- et pour d'autre part récupérer sur le réseau radio le code (CB) associé à l'information (I) sélectionnée et validée par l'utilisateur de la télécommande, afin d'émettre ce code.

## Revendications

1. Système permettant d'informer à distance et de manière sélective un utilisateur dans un environnement, ledit système comportant plusieurs balises signalétiques (Bᵢ) et au moins une télécommande (T) qui est destinée à être manipulée par l'utilisateur et qui comporte :
- un émetteur radio (6),
- des moyens de sélection (8) permettant à l'utilisateur de sélectionner une information (I) parmi un ensemble d'informations (Iⱼ),
- des moyens de restitution vocale (9) permettant de restituer vocalement, de manière audible et compréhensible pour l'utilisateur, systématiquement chaque information (I) sélectionnée à l'aide des moyens de sélection (8),
- des moyens de validation (10) permettant à l'utilisateur de déclencher l'émission par l'émetteur (6) d'un code (CB) spécifique de la dernière information (I) qui a été restituée vocalement,
et chaque balise (Bᵢ) comportant :
- un récepteur radio (2),
- des moyens de reconnaissance des codes reçus,
- des moyens de signalisation (4) qui sont déclenchés lorsqu'un code reçu (CB) a été reconnu.

2. Système selon la revendication 1, **caractérisé en ce qu'**une télécommande (T) comporte au moins une mémoire (55) dans laquelle sont stockés plusieurs codes (CBⱼ) différents et plusieurs informations (Iⱼ) différentes, chaque code (CBⱼ) étant associé à une information (Iⱼ) qui lui est spécifique.

3. Système selon la revendication 1 ou 2, **caractérisé en ce que** les moyens de sélection (8) sont conçus pour permettre à l'utilisateur de parcourir de manière séquentielle et en boucle les informations (Iⱼ).

4. Système selon l'une des revendications 1 à 3, **caractérisé en ce que** la télécommande comporte un récepteur radio (7).

5. Système selon l'une des revendications 1 à 4, **caractérisé en ce qu'**au moins une balise (Bᵢ) comporte un émetteur radio (3).

6. Système selon la revendication 4, **caractérisé en ce qu'**une télécommande (T) est paramétrable par radio avec des codes (CBⱼ) et des informations (Iⱼ).

7. Système selon les revendications 4 et 5, **caractérisé en ce qu'**une télécommande (T) est paramétrable par radio, par tout ou partie des balises (Bᵢ), avec des codes (CBⱼ) et des informations (Iⱼ).

8. Système selon les revendications 4 et 5, **caractérisé en ce que** la ou les télécommandes (T) sont conçues pour communiquer avec les balises (Bᵢ) via un réseau radio.

9. Système selon l'une des revendications 1 à 8, **caractérisé en ce que** les moyens de signalisation (4) comportent des moyens de diffusion sonore (40).

10. Système selon la revendications 9, **caractérisé en ce que** les moyens de diffusion sonore (40) d'une balise comportent des moyens de restitution vocale permettant de restituer vocalement et de manière amplifiée un message vocal.

11. Système selon l'une des revendications 1 à 10, **caractérisé en ce que** les moyens de signalisation (4) comportent des moyens (41) de diffusion d'une information visuelle.

12. Télécommande (T) pour système d'information sélectif et à distance d'un utilisateur, et comportant :
- un émetteur radio (6),
- des moyens de sélection (8) permettant à l'utilisateur de sélectionner une information (I) parmi un ensemble d'informations (Ij),
- des moyens de restitution vocale (9) permettant de restituer vocalement, de manière audible et compréhensible pour l'utilisateur, systématiquement chaque information (I) sélectionnée à l'aide des moyens de sélection (8),
- des moyens de validation (10) permettant à l'utilisateur de déclencher l'émission par l'émetteur (6) d'un code (CB) spécifique de la dernière information (I) qui a été restituée vocalement.

13. Télécommande (T) selon la revendication 12, **caractérisée en ce qu'**une télécommande (T) comporte au moins une mémoire (55) dans laquelle sont stockés plusieurs codes (CBⱼ) différents et plusieurs informations (Iⱼ) différentes, chaque code (CBⱼ) étant associé à une information (Iⱼ) qui lui est spécifique.

14. Télécommande selon la revendication 12 ou 13, **caractérisée en ce que** les moyens de sélection (8) sont conçus pour permettre à l'utilisateur de parcourir de manière séquentielle et en boucle les informations (Iⱼ).

15. Télécommande selon l'une des revendications 12 à 14, **caractérisée en ce qu'**elle comporte un récepteur radio (7).

16. Télécommande selon la revendication 15, **caractérisée en ce qu'**elle est paramétrable par radio avec des codes (CBⱼ) et des informations (Iⱼ).

17. Procédé de mise en oeuvre du système visé à l'une des revendications 1 à 11 **caractérisé en ce qu'**un utilisateur muni d'une télécommande (T), effectue les opérations suivantes :
- sélection au moyen de la télécommande (T) d'une information (I) parmi un ensemble d'informations (Iⱼ), ladite information sélectionnée (I) étant systématiquement resituée vocalement à l'utilisateur par la télécommande,
- validation au moyen de la télécommande (T) d'une information (I) qui, après restitution vocale, convient à l'utilisateur, ce qui déclenche l'émission par la télécommande (T) du code (CB) spécifique de l'information (I) sélectionnée et validée,
- repérage visuel et/ou auditif par l'utilisateur d'au moins une balise de l'environnement qui, après réception et reconnaissance du code (CB) émis par la télécommande, diffuse une information sonore et/ou visuelle.

18. Utilisation du système visé à l'une des revendications 1 à 11 pour informer et/ou guider et/ou aider une personne à se repérer dans un environnement, ladite personne étant équipée d'une télécommande (T) et les balises (Bᵢ) étant réparties dans l'environnement.
